# EUROPÄISCHE PATENTANMELDUNG

(11) **EP 3 618 009 A1**
(43) Veröffentlichungstag der Anmeldung: **04.03.2020**
(21) Anmeldenummer: 19190445.7
(22) Anmeldetag: 07.08.2019
(51) Int. Cl.: G07C 3/00, G08B 21/18, A47L 11/00, G05D 1/00

(54) **AUTONOM BEWEGLICHE MASCHINE**

(30) Priorität: 27.08.2018 DE 102018214448
(71) Anmelder: BSH Hausgeräte GmbH, 81739 München (DE)
(72) Erfinder: Hohmann, Michael, 97616 Bad Neustadt a.d. Saale (DE); Longhino, Werner, 84561 Mehring (DE); Sharma, Somanath, 560 103 Bengaluru (Bellandur) (IN)

(57) **Zusammenfassung**

Ein Verfahren zum Steuern einer autonom beweglichen Maschine umfasst Schritte des Bestimmens, dass die Maschine stillsteht; des Bestimmens, dass die Maschine eine Bild- oder Tonaufnahme macht; und des Bereitstellens einer akustischen Ausgabe, um auf die Aufnahme aufmerksam zu machen.

## Beschreibung

Die Erfindung betrifft eine autonom bewegliche Maschine. Insbesondere betrifft die Erfindung eine Maschine, die zur Bild- oder Tonaufnahme eingerichtet ist.

Eine Maschine zur automatischen Bodenreinigung ist dazu eingerichtet, sich autonom in einem Haushalt zu bewegen. Häufig umfasst die Maschine zur Erfüllung ihres Zwecks oder für eine Zusatzfunktion eine Kamera zur Aufnahme von Bildern oder zur Bereitstellung eines Videodatenstroms.

In manchen Ländern ist vorgeschrieben, keine Vorrichtungen zu betreiben, die dazu eingerichtet sind, eine unbemerkte Aufnahme des gesprochenen Worts oder eines Bilds eines Dritten anzufertigen. Insbesondere kann es unzulässig sein, wenn die Maschine als Gegenstand des täglichen Gebrauchs wahrgenommen wird oder als solcher verkleidet ist.

Üblicherweise wird eine solche Maschine entsprechend gekennzeichnet, beispielsweise mit einem unentfernbar, gut sichtbaren Bild- oder Tonaufnahmesymbol. Trotzdem kann die Maschine in einen Betriebszustand geraten, in welchem sie eine Aufnahme tätigt, ohne dass dies einer insbesondere haushaltsfremden Person im Umfeld bewusst ist.

Eine der vorliegenden Erfindung zu Grunde liegende Aufgabe besteht in der Bereitstellung einer verbesserten Technik, mit der eine autonom bewegliche Maschine ausreichend eindringlich auf eine stattfindende Aufnahme hinweisen kann. Die Erfindung löst diese Aufgabe mittels der Gegenstände der unabhängigen Ansprüche. Unteransprüche geben bevorzugte Ausführungsformen wieder.

Ein Verfahren zum Steuern einer autonom beweglichen Maschine umfasst Schritte des Bestimmens, dass die Maschine stillsteht; des Bestimmens, dass die Maschine eine Bild- oder Tonaufnahme macht; und des Bereitstellens einer akustischen Ausgabe, um auf die Aufnahme aufmerksam zu machen.

Es wurde erkannt, dass die Maschine im Stilstand so unauffällig sein kann, dass von ihr aufgenommene Bild- oder Toninformationen gegen das Persönlichkeitsrecht einer Person im Umfeld verstoßen kann. Statt einer periodischen oder permanenten Ausgabe eines akustischen Hinweises auf eine stattfindende Aufnahme kann erfindungsgemäß selektiv nur in den Situationen, in denen die Anwesenheit der Maschine unbemerkt bleiben kann, ein akustischer Hinweis ausgegeben werden. Eine akustische Belästigung einer Person im Umfeld kann verringert sein.

Die akustische Ausgabe kann nur dann bereitgestellt werden, wenn ein Betriebsgeräusch der Maschine unter einem vorbestimmten Schwellenwert liegt. Auffällige Situationen können mit verbesserter Trennschärfe von unauffälligen unterschieden werden. Die Häufigkeit der Ausgabe des akustischen Hinweises kann weiter reduziert werden.

Die akustische Ausgabe kann derart bereitgestellt werden, dass ein Betriebsgeräusch der Maschine zusammen mit der Ausgabe einen vorbestimmten Schwellenwert übersteigt. Die akustische Ausgabe kann sozusagen das Betriebsgeräusch ergänzend auf ein Niveau steigern, von dem angenommen werden kann, dass es eine Person im Umfeld ausreichend auf die Maschine aufmerksam macht. Ist das Betriebsgeräusch höher, so kann auf die akustische Ausgabe verzichtet werden. Beispielsweise kann ein Staubsaugroboter ein ausreichend lautes Betriebsgeräusch abgeben, wenn er gleichzeitig fährt und saugt. Steht er an einer Stelle still, etwa für eine Intensivreinigung, so kann das Betriebsgeräusch niedriger sein und durch die akustische Ausgabe künstlich angehoben werden.

Die akustische Ausgabe kann bereitgestellt werden, indem eine Funktionskomponente der Maschine in Betrieb gesetzt wird, deren Betrieb ein Geräusch bedingt. Eine solche Komponente kann mit der Funktion der Maschine verbunden sein und beispielsweise eine Funktionskomponente wie ein Saugwerk oder ein Kehrwerk umfassen. Auch eine allgemeine Komponente wie ein Lüfter kann das Geräusch erzeugen. Dadurch können die Geräuschemissionen der Maschine als selbstverständlicher empfunden werden. Eine Person im Umfeld kann sich durch die akustische Ausgabe weniger gestört fühlen.

Die akustische Ausgabe kann bereitgestellt werden, indem ein vorbestimmtes Geräusch ausgegeben wird. Das Geräusch kann insbesondere synthetisch erzeugt oder von einer Aufnahme wiedergegeben werden. Das Geräusch kann beispielsweise einen Ton, einen Klang, eine Melodie oder gesprochene Sprache umfassen, optional in einer Sprache, die durch einen Benutzer auswählbar sein kann.

Die akustische Ausgabe kann auf die Art der Aufnahme hinweisen. So können beispielsweise ein erstes vorbestimmtes Geräusch auf eine Bildaufnahme, ein zweites vorbestimmtes Geräusch auf eine Tonaufnahme und ein drittes vorbestimmtes Geräusch auf eine Videoaufnahme hinweisen. Kombinationen sind ebenfalls möglich. Auch Aufnahmeparameter können akustisch codiert sein. Beispielsweise kann eine Tonhöhe zu einer veränderlichen Brennweite einer Kamera korrespondieren.

Die akustische Ausgabe kann erst eine vorbestimmte Zeit nach dem Eintreten der überprüften Bedingungen bereitgestellt werden. Dadurch kann eine Dauerbeschallung vermieden werden, die von einem Benutzer als unangenehm empfunden werden kann. In einer Ausführungsform wird die Lautstärke der akustischen Ausgabe über eine vorbestimmte Zeit hinweg sukzessive angehoben, um eine Belästigung einer Person im Umfeld so gering wie möglich zu halten. Dabei kann die Ausgabe unmittelbar oder zeitverzögert nach dem Eintreten der überprüften Bedingungen begonnen werden.

Die akustische Ausgabe kann in einem vorbestimmten Frequenzband bereitgestellt werden, wobei die Tonaufnahme in diesem Frequenzband abgeschwächt werden kann. Dadurch kann die Ausgabe die Tonaufnahme nur wenig stören. Bevorzugt liegt das Frequenzband der Ausgabe außerhalb eines Frequenzspektrums, das durch menschliche Stimmen verwendet wird, sodass insbesondere die Tonaufnahme einer Unterhaltung möglichst ungestört ist.

Eine autonom bewegliche Maschine umfasst eine Vorrichtung zur Bestimmung, dass die Maschine stillsteht; eine Abtasteinrichtung zur Bild- oder Tonaufnahme; und eine Steuervorrichtung zur Bereitstellung einer akustischen Ausgabe, falls die Maschine stillsteht und eine Bild- oder Tonaufnahme macht, um auf die Aufnahme aufmerksam zu machen.

Die Maschine kann eine Verarbeitungseinrichtung umfassen, die insbesondere als programmierbarer Mikrocomputer oder Mikrocontroller ausgebildet sein kann. Die Verarbeitungseinrichtung kann dazu eingerichtet sein, ein hierin beschriebenes Verfahren ganz oder teilweise auszuführen. Das Verfahren kann dazu als Computerprogrammprodukt mit Programmcodemitteln auf der Verarbeitungseinrichtung ablaufen oder auf einem computerlesbaren Datenträger abgespeichert sein.

Die Maschine kann insbesondere zur Bearbeitung einer Bodenfläche eingerichtet sein.

Der Einsatz der Maschine ist bevorzugt auf einen vorbestimmten Bereich beschränkt. Beispielsweise kann die Maschine einen Saug-, Kehr- oder Wischroboter, umfassen und für den Einsatz in einem Haushalt, insbesondere im Innenraum, eingerichtet sein. Die Maschine kann auch einen automatischen Rasenschneider umfassen und für den Einsatz im Außenraum auf einem vorbestimmten Gelände, insbesondere auf einem zu einem Haushalt gehörenden Garten, eingerichtet sein.

Die Erfindung wird nun unter Bezug auf die beiliegenden Figuren genauer beschrieben, in denen:
- Figur 1: eine beispielhafte, autonom bewegliche Maschine;
- Figur 2: ein Ablaufdiagramm eines exemplarischen Verfahrens zum Steuern einer autonom beweglichen Maschine; und
- Figur 3: einen beispielhaften endlichen Automaten zur Steuerung einer autonom beweglichen Maschine
darstellt.

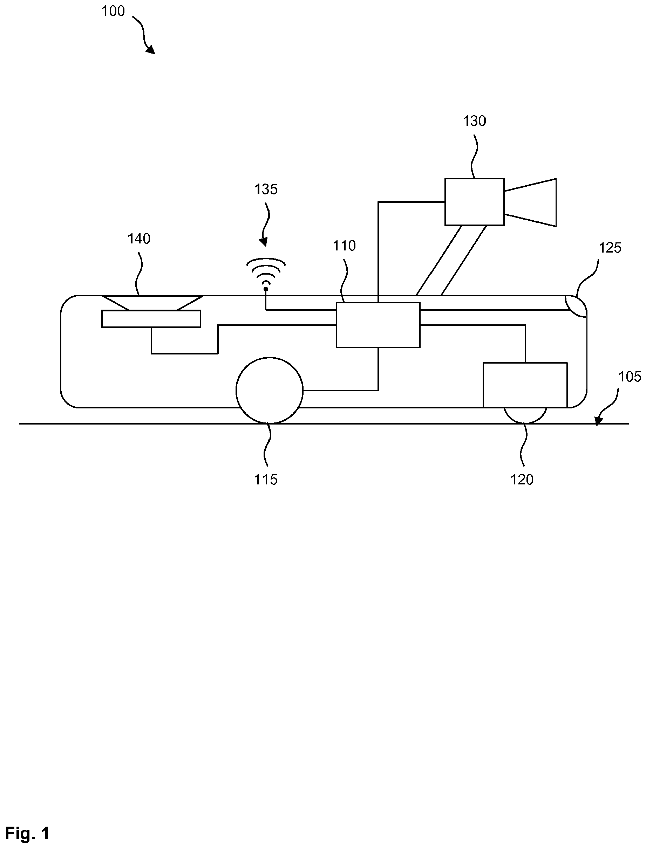

Figur 1 zeigt eine beispielshafte Maschine 100, insbesondere zum Einsatz in einem Haushalt. Die Maschine 100 ist auf einer vorbestimmten Bodenfläche 105 autonom beweglich und umfasst eine Steuervorrichtung 110, die bevorzugt eine computerbasierte Verarbeitungseinrichtung umfasst, und eine Antriebseinrichtung 115 zur Bewegung auf der Bodenfläche 105.

Die Maschine 100 kann einem vorbestimmten Zweck im Haushalt dienen, wofür eine Bearbeitungsvorrichtung 120 vorgesehen sein kann, die an den jeweiligen Zweck angepasst ist. In der dargestellten Ausführungsform ist die Bearbeitungsvorrichtung 120 zur Bearbeitung der Bodenfläche 105 eingerichtet. Ein Betrieb der Bearbeitungsvorrichtung 120 kann ein vorbestimmtes Betriebsgeräusch bedingen. Dabei kann eine Betriebsart der Bearbeitungsvorrichtung 120 eine Art oder Lautstärke des Betriebsgeräuschs beeinflussen. Beispielsweise kann ein Saugwerk mit unterschiedlichen Drehzahlen betrieben werden, möglicherweise kann ein Abstand zwischen dem Saugwerk und der Bodenfläche 105 variiert werden, oder eine Saugstärke kann an eine Bewegungsgeschwindigkeit der Maschine 100 angepasst werden.

Zur Navigation auf der Bodenfläche 105 können einer oder mehrere Sensoren 125 bereitgestellt sein, um ein Umfeld der Maschine 100 abzutasten. Der Sensor 125 kann insbesondere einen Ultraschall-, Radar- oder LiDAR-Sensor umfassen; weitere beispielhafte Möglichkeiten umfassen einen Kontaktsensor, eine Lichtschranke, einen Kompass oder einen Beschleunigungssensor. Die Navigation kann auf der Basis von Kartendaten erfolgen, die von außen bereitgestellt oder auf der Basis von Abtastungen mittels des Sensors 125 erstellt sein können. Bestehende Kartendaten können auf der Basis von Sensormessungen verändert werden. Der Sensor 125 kann zur Erkennung dynamischer Gegebenheiten im Umfeld verwendet werden, etwa zur Kollisionsvermeidung mit einer Person, einem Tier oder einem Objekt.

Ferner ist die Maschine 100 mit einer Abtasteinrichtung 130 zur Bereitstellung einer Bild- und/oder Tonaufnahme eingerichtet. Die Abtasteinrichtung 130 kann auch als Sensor 125 für die Navigation der Maschine 100 genutzt werden. Die Abtasteinrichtung 130 kann eine zusätzliche Einrichtung sein, die einem Nutzen dient, der vom Hauptnutzen der Maschine 100, beispielsweise der Bearbeitung der Bodenfläche 105, unabhängig ist. Beispielsweise kann die Abtasteinrichtung 130 eine Videokamera zur Raumüberwachung umfassen. Die Abtasteinrichtung 130 kann steuerbar sein, um beispielsweise einen Abtastwinkel, eine Abtastrichtung oder eine Brennweite zu verändern. Die Abtasteinrichtung 130 kann auch ausfahrbar gestaltet sein, um ihre Höhe über der Bodenfläche 105 zu verändern.

Die Maschine 100 kann ferner eine Kommunikationsschnittstelle 135 umfassen, die bevorzugt zur drahtlosen Kommunikation eingerichtet ist. Die Schnittstelle 135 kann beispielsweise nach dem Bluetooth-, WLAN- oder einem Mobilfunkstandard arbeiten. Über die Schnittstelle 135 kann aufgezeichnetes Bild- und/oder Tonmaterial der Abtasteinrichtung 130 kann über die Kommunikationsschnittstelle 135 nach außen bereitgestellt werden. Das Material kann auch an Bord der Maschine 100 in einem Speicher vorgehalten werden. Eine Kommunikation kann mit einer externen Einrichtung wie einer zentralen Stelle, etwa in Form eines Servers oder eines Diensts in einer Cloud, erfolgen. Über die Kommunikationsschnittstelle 135 kann auch ein anderes Gerät, insbesondere ein weiteres Gerät im gleichen Haushalt, angesprochen werden.

Eine akustische Ausgabevorrichtung 140 ist dazu eingerichtet, ein vorbestimmtes akustisches Signal bereitzustellen. Die Ausgabevorrichtung 140 kann eine Funktionskomponente der Maschine 100 umfassen, deren Betrieb ein Geräusch bedingt. Die Funktionskomponente kann insbesondere einem Hauptzweck der Maschine 100 dienen. Umfasst die Maschine 100 beispielsweise einen Bodenstaubsauger, so kann die Funktionskomponente etwa ein Saugwerk, eine Rotationsbürste oder einen Klopfer umfassen. Ist die Maschine 100 in einem weiteren Beispiel als Rasenmäher ausgebildet, so kann die Funktionskomponente beispielsweise ein Schneidwerk umfassen. Auch eine allgemeine Funktionskomponente der Maschine 105 kann verwendet werden, beispielsweise ein Lüfter.

Alternativ kann die Ausgabevorrichtung 140 zur Ausgabe eines vorbestimmten Geräuschs eingerichtet sein, das beispielsweise einen Ton, einen Klang, einen Akkord, eine Melodie oder gesprochene Sprache umfassen kann. Das vorbestimmte Geräusch kann auf eine stattfindende Aufnahme der stillstehenden Maschine 100 hinweisen. In einer Ausführungsform sind unterschiedliche Töne vorgesehen, die beispielsweise eine Tonaufnahme oder eine Bildaufnahme repräsentieren. Mittels weiterer Töne kann auf den Anfang oder das Ende einer Aufnahme hingewiesen werden. Anhand des Tons kann auch zwischen einer lokal abgespeicherten und einer unmittelbar ins Netz, auf einen Server oder in eine Cloud bereitgestellten Aufnahme unterschieden werden.

Steht die Maschine 100 auf der Bodenfläche 105 still, während sie mittels der Abtasteinrichtung 130 eine Aufnahme macht, so kann verhindert werden, dass eine Person ungewollt und insbesondere unbemerkt optisch oder akustisch abgetastet wird, indem die Maschine 100 akustisch auf die Aufnahme hinweist. Es wird davon ausgegangen, dass ein zusätzlicher akustischer Hinweis nicht erforderlich ist, während sich die Maschine 100 auf der Bodenfläche 105 bewegt, da sie dann als bewegliches Objekt, üblicherweise mit einem gewissen Betriebsgeräusch, gut wahrnehmbar ist. In diesem Fall oder wenn keine Abtastung mittels der Abtasteinrichtung 130 erfolgt, wird die akustische Ausgabe bevorzugt unterdrückt. Zusätzlich sollte ein optischer Warnhinweis auf der Maschine 100 angebracht sein, der beispielsweise in Form eines Piktogramms auf die Möglichkeit einer Audio- und/oder Videoaufnahme hinweist.

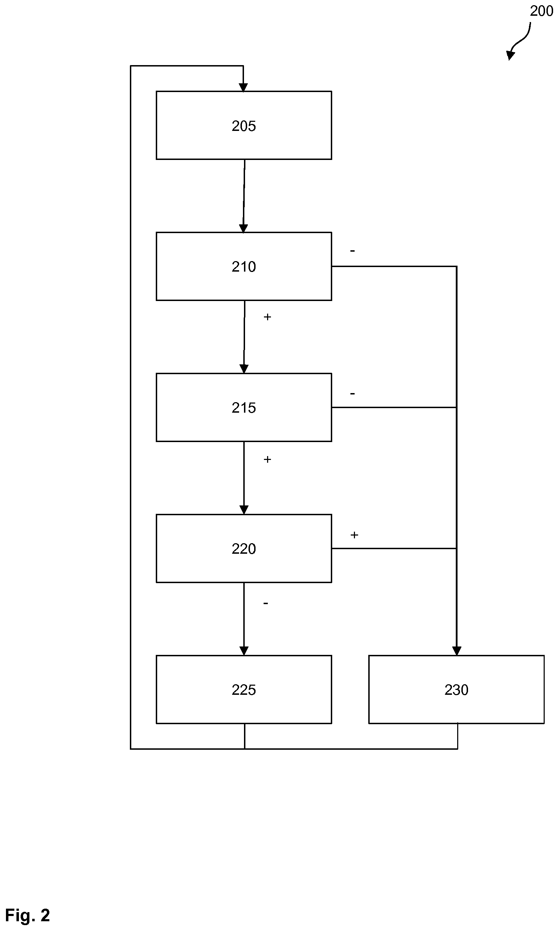

Figur 2 zeigt ein Ablaufdiagramm eines Verfahrens 200 zum Steuern einer autonom beweglichen Maschine 100. Das Verfahren 200 kann teilweise oder vollständig mittels einer Steuervorrichtung 110 einer Maschine 100 ausgeführt werden. Die Schritte des Verfahrens 200 müssen nicht notwendigerweise in der angegebenen Reihenfolge ausgeführt werden, wie einem Fachmann unmittelbar einleuchtet.

In einem ersten Schritt 205 kann die Maschine 100 in Betrieb genommen werden. Die Inbetriebnahme kann beispielsweise zeit- oder ereignisgesteuert erfolgen. In einer Ausführungsform kann die Maschine 100 auch über ein Signal in Betrieb genommen werden, das sie über die Schnittstelle 135 empfangen kann.

In einem Schritt 210 wird überprüft, ob eine Bild- und/oder Tonaufnahme, insbesondere mittels der Abtasteinrichtung 130, aktiv ist. Ist dies der Fall, so wird in einem Schritt 215 geprüft, ob sich die Maschine 100 auf der Bodenfläche 105 bewegt. Umfasst die Maschine 100 einen externen Aktuator, so kann der Stillstand nicht nur eine Bewegung auf der Bodenfläche 105, sondern zusätzlich auch eine Bewegung des Aktuators betreffen. In der Ausführungsform von Figur 1 kann ein solcher Aktuator beispielsweise zum Heben oder Senken der Abtasteinrichtung 130 vorgesehen sein.

Wurde auch der Stillstand der Maschine 100 bestimmt, so kann in einem Schritt 220 überprüft werden, ob eine Vorrichtung an Bord der Maschine 100 aktiv ist, deren Betrieb mit einem vorbestimmten Betriebsgeräusch verbunden ist. Eine solche Vorrichtung kann insbesondere die Bearbeitungsvorrichtung 120 umfassen. Bevorzugt wird überprüft, ob ein Betriebsgeräusch der Maschine 100, also potentiell die Summe aller akustischen Emissionen von Einrichtungen an Bord der Maschine 100 zusammengenommen, eine vorbestimmte Stärke überschreiten. Die Stärke kann insbesondere in der Einheit Dezibel oder Sone angegeben sein. Auf einer psychoakustischen Skala wie der Sone-Skala kann neben einer physikalischen Lautstärke auch eine Eindringlichkeit eines Geräuschs bewertet werden. Zur Bestimmung der Stärke des Betriebsgeräuschs können Aktivierungszustände von Elementen der Maschine 100 zu Grunde gelegt werden. Dazu können verschiedenen Elementen verschiedene und insbesondere verschieden starke Betriebsgeräusche zugeordnet sein. Alternativ kann ein Mikrofon zur Bestimmung eines aktuellen Betriebsgeräuschs vorgesehen sein.

Ist das Betriebsgeräusch der Maschine 100 nicht ausreichend laut oder eindringlich, so kann in einem Schritt 225 ein akustisches Signal bereitgestellt werden, das auf eine laufende Aufnahme mittels der Abtasteinrichtung 130 hinweist. Optional wird die Bereitstellung des Signals um eine vorbestimmte Zeit verzögert und ganz unterdrückt, wenn innerhalb dieser Zeit eine der Bedingungen, die zum Schritt 225 geführt haben, nicht mehr erfüllt ist.

In einer ersten Ausführungsform wird die akustische Ausgabe mittels der Ausgabevorrichtung 140 bereitgestellt. Die Art der akustischen Ausgabe kann dabei frei gewählt sein. Bevorzugt wird eine Intensität der akustischen Ausgabe an ein ohnehin durch die Maschine 100 emittiertes Betriebsgeräusch angepasst, sodass die Summe der Geräuschbelastungen der Maschine 100 bevorzugt auf einem vorbestimmten Niveau liegt. In einer zweiten Ausführungsform wird die akustische Ausgabe nicht mittels einer dedizierten Ausgabevorrichtung 140 bereitgestellt, sondern das Betriebsgeräusch der Maschine 100 wird durch Ansteuerung einer oder mehrerer Komponenten der Maschine 100 so verändert, dass es als ausreichend starke akustische Ausgabe angesehen werden kann. Insbesondere kann hierzu die Bearbeitungsvorrichtung 120 teilweise oder ganz aktiviert werden.

Das Verfahren 200 kann anschließend zum Anfang zurückkehren und erneut durchlaufen. Zweck des Verfahrens 200 ist, möglichst nur dann eine akustische Ausgabe bereitzustellen, die auf eine Bild- und/oder Tonaufnahme der Maschine 100 hinweist, wenn diese stillsteht.

In einem Schritt 230 kann die akustische Ausgabe abgestellt werden, wenn in einem der Schritte 210 bis 220 keine Entscheidung getroffen werden kann, die zum Schritt 225 führt. Insbesondere wenn im Schritt 210 bestimmt wird, dass keine Aufnahme aktiv ist, wenn im Schritt 215 bestimmt wird, dass sich die Maschine 100 nicht im Stillstand befindet oder wenn im Schritt 220 bestimmt wird, dass ein Betriebsgeräusch der Maschine 100 bereits ausreichend stark ist, kann zum Schritt 230 verzweigt werden. Auch nach dem Schritt 230 kann das Verfahren 200 erneut durchlaufen.

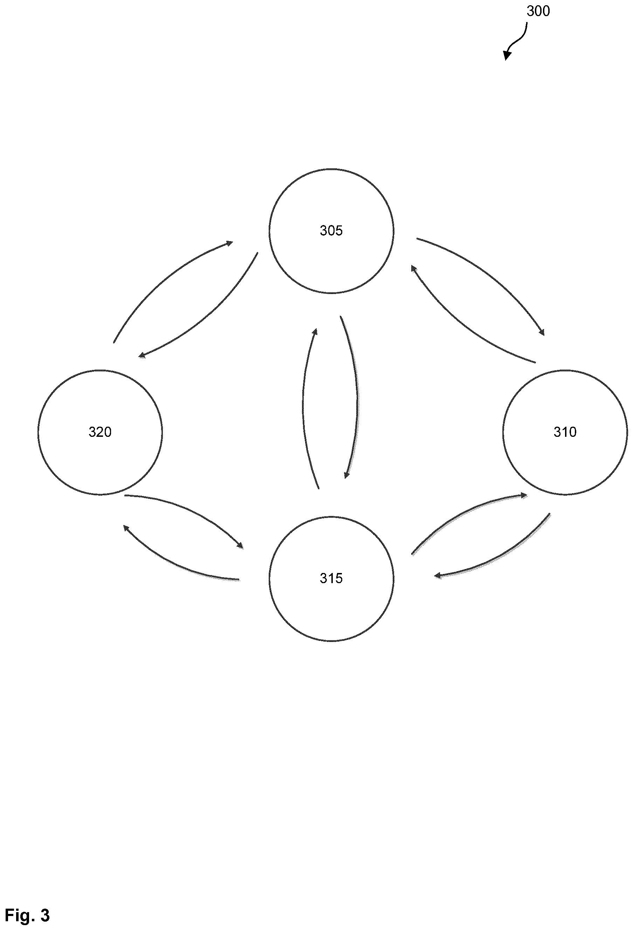

Figur 3 zeigt einen beispielhaften endlichen Automaten 300 einer autonom beweglichen Maschine 100. Der endliche Automat 300 kann als alternative Darstellung des Verfahrens 200 von Figur 2 begriffen werden. Optionen und Varianten des Verfahrens 200 können in auf den endlichen Automaten 300 übertragen werden und umgekehrt.

Der endliche Automat 300 umfasst eine Anzahl Zustände, die als Kreise dargestellt sind, zwischen denen vorbestimmte Übergänge definiert sind, die als Pfeile dargestellt sind. Ein erster Zustand 305 repräsentiert vorliegend eine sich bewegende Maschine 100, die gleichzeitig eine Bild- und/oder Tonaufnahme mittels der Abtasteinrichtung 130 anfertigt. Ein zweiter Zustand 310 repräsentiert die Maschine 100 im Stillstand, während eine Aufnahme angefertigt wird. Ein dritter Zustand 315 kann eingenommen werden, wenn sich die Maschine 100 in Bewegung befindet, jedoch keine Aufnahme angefertigt wird. Ein vierter Zustand 320 kann eingenommen werden, wenn die Maschine 100 stillsteht und die Aufnahme inaktiv ist.

Eine akustische Ausgabe erfolgt im endlichen Automaten 300 bevorzugt lediglich im zweiten Zustand 310. In allen anderen Zuständen ist die Aufnahme abgestellt oder der Betrieb der Maschine 100 reicht aus, um einen Hinweis auf eine mögliche Aufnahme mittels der Abtasteinrichtung 130 zu geben. Dies gilt insbesondere dann, wenn eine optische Kennzeichnung, beispielsweise in Form eines Symbols oder eines Hinweisschilds, an der Maschine 100 angebracht ist. Eine Person muss dann nur noch die Maschine 100 wahrnehmen, um auch die Kennzeichnung wahrnehmen zu können. Eine von der Person unbemerkte Aufzeichnung durch die Maschine 100 ist dann nicht mehr möglich.

Vom ersten Zustand 305 kann in den zweiten Zustand 310 übergegangen werden, wenn die Maschine 100 anhält. Ein umgekehrter Übergang kann erfolgen, wenn die Maschine 100 eine Bewegung aufnimmt. Vom zweiten Zustand 310 kann in den dritten Zustand 315 übergegangen werden, wenn gleichzeitig die Bewegung der Maschine 100 aktiviert und die Aufnahme deaktiviert wird. Der umgekehrte Übergang erfordert das Deaktivieren der Bewegung und das Aktivieren der Aufnahme.

Vom dritten Zustand 315 in den vierten Zustand 320 kann übergegangen werden, wenn die Maschine 100 anhält. Ein umgekehrter Übergang erfolgt, wenn aus dem vierten Zustand 320 heraus die Bewegung der Maschine 100 aktiviert wird. Vom vierten Zustand 320 kann durch gleichzeitiges Aktivieren der Bewegung der Maschine 100 und Aktivieren der Aufnahme in den ersten Zustand 305 übergegangen werden. Umgekehrt kann vom ersten Zustand 305 in den vierten Zustand 320 übergegangen werden, wenn die Bewegung der Maschine 100 deaktiviert und gleichzeitig die Aufnahme deaktiviert wird.

Ein Übergang der Maschine 100 vom ersten Zustand 305 in den dritten Zustand 315 kann bei Deaktivieren der Aufnahme, ein umgekehrter Übergang bei Aktivieren der Aufnahme erfolgen. Ebenfalls möglich, aber nicht in Figur 3 dargestellt, sind Übergänge zwischen dem zweiten Zustand 310 und dem vierten Zustand 320. Weitere Zustände kann ein Fachmann leicht auf der Basis von hierin genannten Varianten oder Optionen hinzufügen und mittels geeigneter Übergänge mit anderen Zuständen 305 bis 320 verbinden.

### Bezugszeichen

- 100: Maschine
- 105: Bodenfläche
- 110: Steuervorrichtung
- 115: Antriebseinrichtung
- 120: Bearbeitungsvorrichtung
- 125: Sensor
- 130: Abtasteinrichtung
- 135: Kommunikationsschnittstelle
- 140: akustische Ausgabevorrichtung

- 200: Verfahren
- 205: Betrieb
- 210: Aufnahme aktiv?
- 215: Stillstand?
- 220: hörbare Vorrichtung aktiv?
- 225: Bereitstellen Signal
- 230: Abstellen Signal

- 300: endlicher Automat
- 305: erster Zustand: Maschine in Bewegung, Aufnahme läuft
- 310: zweiter Zustand: Maschine im Stillstand, Aufnahme läuft
- 315: dritter Zustand: Maschine in Bewegung, Aufnahme inaktiv
- 320: vierter Zustand: Maschine im Stillstand, Aufnahme inaktiv

## Patentansprüche

1. Verfahren (200) zum Steuern einer autonom beweglichen Maschine (100), wobei das Verfahren (200) folgende Schritte umfasst:
- Bestimmen (215), dass die Maschine (100) stillsteht;
- Bestimmen (210), dass die Maschine (100) eine Bild- oder Tonaufnahme macht; und
- Bereitstellen (225) einer akustischen Ausgabe, um auf die Aufnahme aufmerksam zu machen.

2. Verfahren (200) nach Anspruch 1, wobei die akustische Ausgabe nur dann bereitgestellt (225) wird, wenn ein Betriebsgeräusch der Maschine (100) unter einem vorbestimmten Schwellenwert liegt.

3. Verfahren (200) nach Anspruch 1 oder 2, wobei die akustische Ausgabe derart bereitgestellt (225) wird, dass ein Betriebsgeräusch der Maschine (100) zusammen mit der Ausgabe einen vorbestimmten Schwellenwert übersteigt.

4. Verfahren (200) nach einem der vorangehenden Ansprüche, wobei die akustische Ausgabe bereitgestellt (225) wird, indem eine Funktionskomponente (120) der Maschine (100) in Betrieb gesetzt wird, deren Betrieb ein Geräusch bedingt.

5. Verfahren (200) nach einem der vorangehenden Ansprüche, wobei die akustische Ausgabe bereitgestellt (225) wird, indem ein vorbestimmtes Geräusch ausgegeben wird.

6. Verfahren (200) nach einem der vorangehenden Ansprüche, wobei die akustische Ausgabe (225) auf die Art der Aufnahme hinweist.

7. Verfahren (200) nach einem der vorangehenden Ansprüche, wobei die akustische Ausgabe erst eine vorbestimmte Zeit nach Eintreten der überprüften Bedingungen bereitgestellt (225) wird.

8. Verfahren (200) nach einem der vorangehenden Ansprüche, wobei die akustische Ausgabe (225) in einem vorbestimmten Frequenzband bereitgestellt und die Tonaufnahme in diesem Frequenzband abgeschwächt wird.

9. Autonom bewegliche Maschine (100), wobei die Maschine (100) folgendes umfasst:
- eine Vorrichtung (115) zur Bestimmung, dass die Maschine (100) stillsteht;
- eine Abtasteinrichtung (130) zur Bild- oder Tonaufnahme; und
- eine Steuervorrichtung (110) zur Bereitstellung einer akustischen Ausgabe, falls die Maschine (100) stillsteht und eine Bild- oder Tonaufnahme macht, um auf die Aufnahme aufmerksam zu machen.

10. Maschine (100) nach Anspruch 9, wobei die Maschine (100) zur Bearbeitung einer Bodenfläche (105) eingerichtet ist.
